# EUROPEAN PATENT APPLICATION

(11) **EP 4 763 752 A1**
(43) Date of publication of application: **24.06.2026**
(21) Application number: 25219828.8
(22) Date of filing: 01.12.2025
(51) Int. Cl.: B65G 15/02, B65G 21/22, B65G 21/20

(54) **SUPPORT AND GUIDE ELEMENT FOR AT LEAST ONE CONVEYOR WITH ARTICULATED MODULES**

(30) Priority: 19.12.2024 IT 202400029241
(71) Applicant: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Kratter, Carlo

(57) **Abstract**

A support and guide element (1) for at least one conveyor with articulated modules (2) adapted to create at least one modular track (3) for guiding the modular conveyor (2), comprising: at least one curvilinear body (4) comprising a plurality of rails (4L) comprising at least one upper surface (4A-4G), which defines a sliding plane, and a base (4K) comprising at least one lower surface (4H), which defines a connecting plane (P2), parallel to the sliding plane (Pl) and is adapted to be constrained to and rest on a flat surface (5A) of a support structure (5); means (6A-6D) for removably connecting the base (4K) to the support structure (5), which keep the base (4K) connected to the support structure (5) and prevent the base (4K) from moving relative to the support structure, in a first direction (Z) perpendicular to the sliding plane (Pl), preventing the planarity of the sliding plane from being affected when the support and guide element is connected to the support structure.

## Description

The present invention relates to a support and guide element for at least one conveyor with articulated modules, and to a conveyor system comprising said support and guide element, according to the pre-characterizing part of the respective independent claims.

Support and guide elements of the type indicated above have been known for a long time and are used with usual modular conveyors which can be of the chain or belt type.

In the case of modular conveyors of the chain type, the support and guide elements may comprise magnets adapted to keep the chain conveyor, which in this case is at least partially made of a ferromagnetic material, adherent to the guide element.

Support elements for conveyors of the chain or belt type are equally well-known in which the connection between the support element and the conveyor is not made by means of magnets but by shape coupling projecting and recessed parts provided in the conveyors and in the support and guide elements; these types of connections are usually referred to as "tab" or "bevel" type connections.

Regardless of the type of connection between the support and guide element and the conveyor, the support and guide element may constitute both the upper part, or forward path, and the lower part, or return path, of a modular track for guiding a modular conveyor with the conveyor modules hinged together and where the conveyor is a closed-loop conveyor.

As is known, a conveyor with articulated modules comprises a sequence of generally plate-like modules, which extend in a direction substantially transversal to the moving direction of the conveyor. In the forward path of the conveyor, in a typical closed-loop configuration, these links form a rest surface for the three-dimensional items moved by the conveyor itself.

Considering the moving direction of the conveyor, each module is connected to a previous module and to a subsequent module by way of hinges usually located in the central part of each module. This way, the modules form a continuous closed-loop conveyor, whose forward and return paths usually overlap.

In the case of belt conveyors, the modules can also be connected to each other transversely to the forward direction of the conveyor itself, thus forming conveyors with a wider width than that of the individual modules.

In the case of conveyors of the chain type, the modules can be made of either steel or plastic, and in the latter case they can be conveniently provided with hinge pins made of ferromagnetic material in order to interact with the magnets of the support and guide element.

The support and guide elements for the closed-loop chain conveyors provide for the forward path of the conveyor a sliding track for each conveyor, provided with a pair of sliding surfaces which guide the sliding motion of the opposite transversal ends of the modules or links of the conveyor in the respective forward journey. A recess, also referred to as channel, is present between the two sliding surfaces which allows to receive the articulation elements of the modules of the conveyor and can include a plurality of seats for housing the magnets. The support and guide element for example provides for the return path one or more guides which direct and support the modules of the conveyor in their return path.

Should it being necessary to guide a plurality of modular conveyors, the support and guide element can be provided with a corresponding plurality of sliding tracks, that is to say one sliding track for each conveyor, and with a plurality of return paths which are usually placed below with respect to such sliding tracks.

In the case of chain conveyors at least partially made of a ferromagnetic material, the support and guide elements generally comprise a plurality of magnets. These magnets are usually positioned below the sliding plane, at the centre line axis of each sliding track. These magnets create a magnetic field which, in the conveyor forward path, keeps the modules or the links thereof adherent to the sliding surfaces of the support and guide element. As a matter of fact, while the conveyor moves, the links would tend to raise from their respective sliding surface, thus jeopardizing the stability of the conveyed objects, if the attraction force exerted by the magnets were not there.

If the chain or belt conveyor is of the so-called "tab" type, each module or link is provided with tabs on the bottom that engage with lower portions of the sliding tracks. The "anti-liftoff" function is, therefore, obtained by the interaction between these tabs and the corresponding lower portions of the sliding tracks rather than the interaction between the magnets and the ferromagnetic material. If, on the other hand, the chain or belt conveyor is of the so-called "bevel" type, each module or link is provided with a dovetail shaped portion on the bottom, designed to slide in a channel between the sliding tracks having a shape which is compatible with the shape of the lower shaped portion of the modules or of the links. This dovetail shape prevents the modules or the links from raising from the respective sliding surface.

The sliding tracks for modular conveyors may have either a rectilinear axis or a curvilinear axis. Examples of curvilinear axis support and guide elements for link conveyors are described, for example, in documents EP 2907774, EP 3546394 and EP 3572358 in the name of the present patent applicant.

The support and guide elements of the known conveyors are constrained to a usual metal support structure which develops in such a way as to be able to support a plurality of support elements arranged in a row so as to form a sliding and guide track for the conveyor. The metal support structure is fixed and generally rests on a floor of the room where the guiding track is located.

The metal support structure generally comprises a plurality of cross members adapted to define a fixed and stable support surface for the support and guide elements, and one or more external side walls perpendicular to the cross members and resting on the side edges of the support and guide elements.

A drawback of the known support and guide elements and of the sliding tracks formed with said support and guide elements, especially if they have a curvilinear axis and when they are made of plastic, is due to their relative instability, which jeopardises the planarity of the sliding surfaces.

In fact, although the known support and guide elements are suitably constrained to the metal support structure, they can be subject to undesired movements due to various thermal variations and/or tensioning due for example to the forces generated during the movement of the link conveyor and/or to the weight of the objects on the conveyor and/or to the differences in thermal expansion between the polymeric materials of which the support and guide elements and the metal support structure to which these support and guide elements are constrained, are made.

The aforementioned drawback often happens for example when a conveyor system, comprising a plurality of support and guide elements constrained in a row to a support structure, is fully manufactured and assembled in a first location and at a first temperature and is then shipped fully assembled to an end customer in a second location having a temperature which is significantly different from the temperature of the first location.

DE 20 2022 103 715 U1 discloses a support and guide structure for an articulated link conveyor, wherein said support and guide structure comprises at least two guides which are separate and arranged at a predefined distance from each other, wherein each guide defines a respective slide surface for a slideway of the conveyor. The support and guide structure also comprises at least one support element having at least one first surface and at least one second surface facing each other, in which the guides project from the first surface to define at least one sliding channel formed by the lateral surfaces of adjacent pairs of the guides and having a length measured along the respective development axis which is shorter than the predefined length of the respective guide.

EP 0 982 243 A2 shows a conveyor connected to the metal frame of the support structure by means of countersunk head screws visible in the figures of the document.

EP 1 879 815 B1 and US2019/185271 A1 disclose the use of slotted holes to allow the expansions due to changes in temperature to be compensated.

The object of the present invention is, therefore, to provide a support and guide element made of a polymeric material for a modular conveyor which is capable of solving the aforementioned drawbacks of the prior art in an extremely simple, economical and particularly functional way.

In detail, it is an object of the present invention to provide a support and guide element which maintains the planarity of the parts on which the conveyor slides, when the guide elements are constrained to one support structure also in the presence of changes in temperature.

Another object of the present invention is to provide a support and guide element for a conveyor with improved deformation resistance capabilities, yet maintaining the same ease of assembly and use as the usual support and guide elements and which can be used with the usual support structures of the support and guide elements.

These objects according to the present invention will be achieved by a support and guide element and a conveyor system according to the characterizing part of the relevant independent claims.

Further characteristics of the invention are highlighted by the dependent claims, which are an integral part of the present description.

The characteristics and advantages of a support and guide structure for a conveyor with articulated links according to the present invention will be clearer from the following exemplifying and hence non-limiting description, referring to the attached schematic drawings in which:
Figure 1 is a top view of a portion of a conveyor system according to the invention comprising only one support and guide element for a conveyor;
Figure 2 is a side view thereof taken along arrow F1 of Figure 1;
Figure 3 is a bottom view thereof;

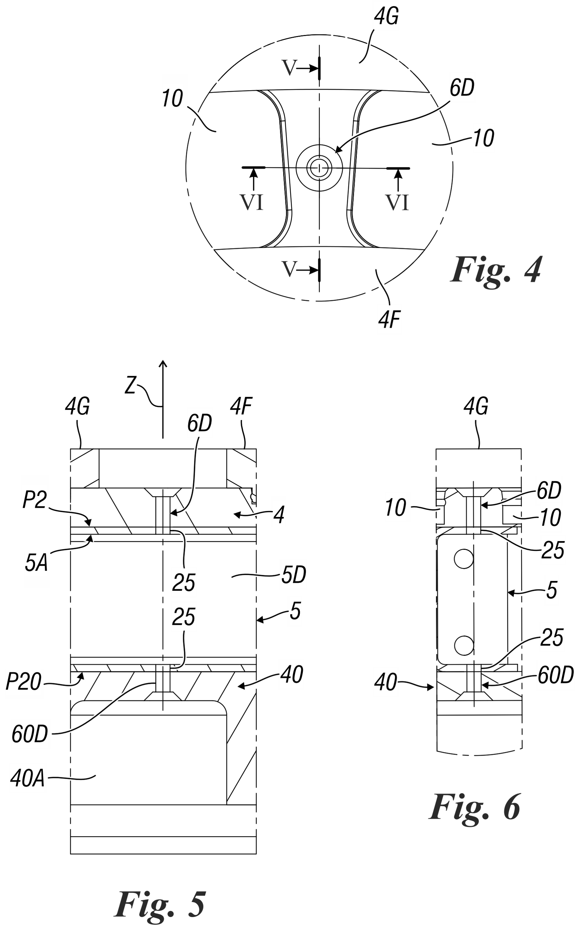

Figure 4 is a top view of the detail indicated with reference F2 in Figure 1;
Figures 5 and 6 are sectional views thereof taken along lines V-V and VI-VI of Figure 4;

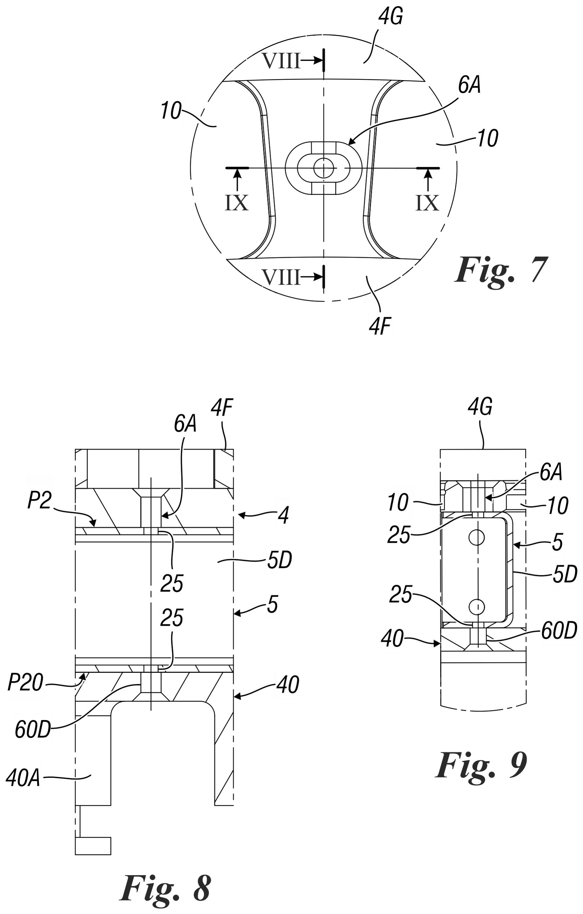

Figure 7 is a top view of the detail indicated with reference F3 in Figure 1;
Figures 8 and 9 are views thereof taken along lines VIII and IX of Figure 7;
Figure 10 is an exploded perspective view of a part of the conveyor system of Figure 1;
Figure 11 shows an enlarged detail of Figure 10,
Figures 12A-12D, 13A-13D 14A-14D 15A-15D are plan and sectional views of four different embodiments of connecting means according to the invention;
Figure 16 is a top view of a further embodiment of the invention.

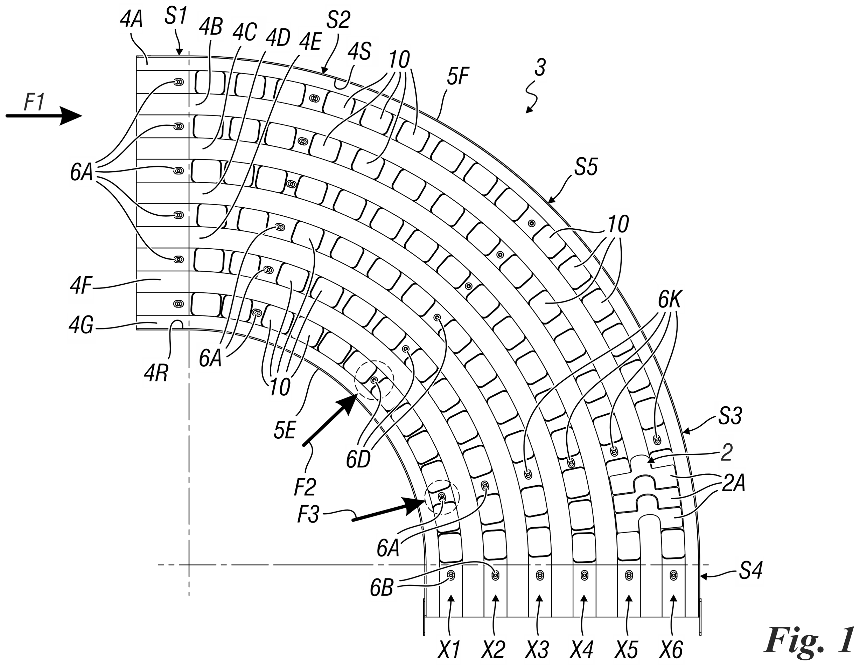

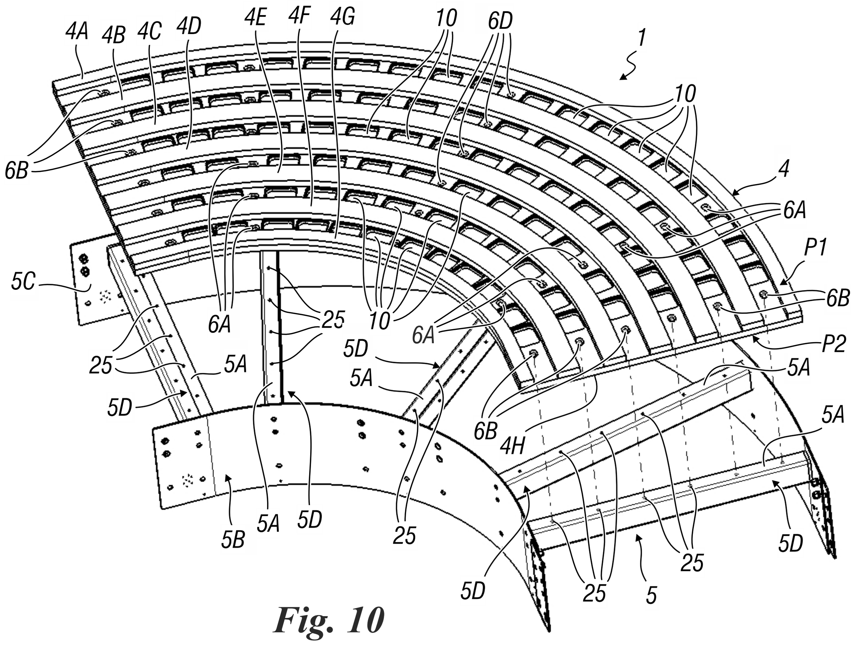

With reference to the aforementioned figures, they show a support and guide element 1 (Fig. 10) for at least one conveyor with articulated modules 2 (partially shown in Fig. 1) for handling three-dimensional items, of the type adapted to create at least one modular track 3 (partially shown in Fig. 1) for guiding said modular conveyor 2, comprising a plurality of said support and guide elements arranged in a row (Fig. 1 only shows one support and guide element).

The conveyor with articulated modules 2 is of the usual type for the person skilled in the art and will therefore not be described in detail below; it may be, for example, of the chain type (as schematically shown in Fig. 1) or of the belt type. The conveyor 2 is a closed-loop conveyor.

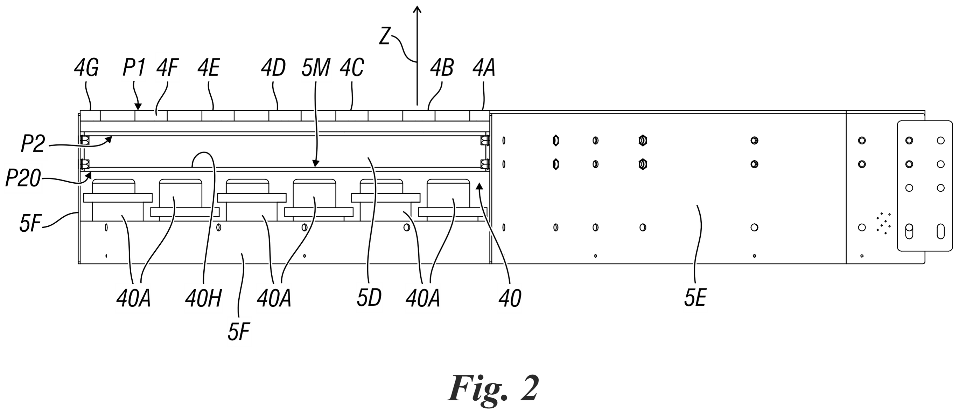

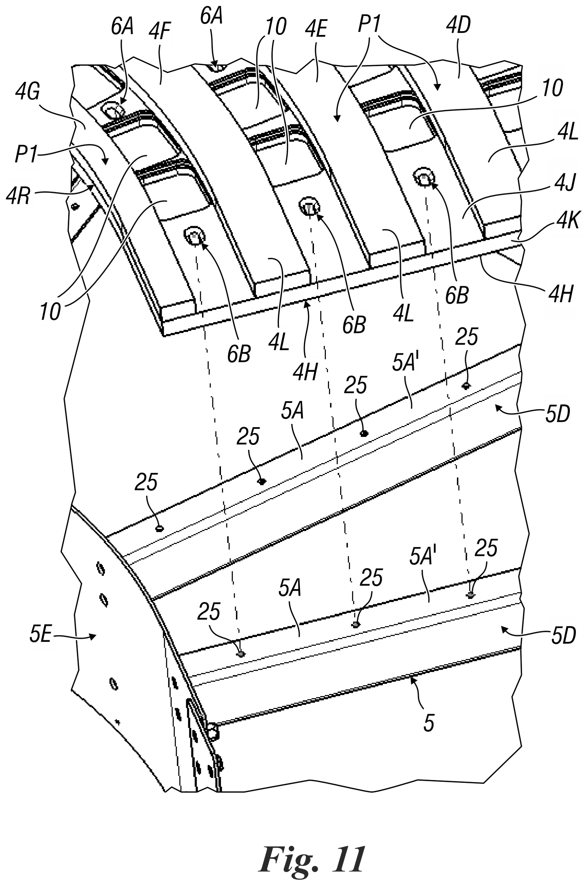

The support and guide elements 1 have a usual shape for the person skilled in the art and comprise a curvilinear a body 4, comprising a plurality of rails 4L (Fig. 11) comprising at least one usual upper surface 4A-4G (the illustrated example shows seven rails with seven distinct upper surfaces), configured, as usual, to define a sliding plane P1 (Fig. 2) for at least one lower flat portion of the modules 2A (Fig. 1) of the conveyor 2 when moved. In the shown example, the conveyor 2 is a usual chain conveyor and each of the modules or links 2A thereof has, as usual for the person skilled in the art, a central body from which two wings extend, the lower surfaces of which are configured to slide each on a dedicated upper surface of the support and guide element 1. The upper surface of the two wings together with the upper surface of the central body of the modules of the conveyor forms a rest surface for the items to be moved. The central body has a part which develops downwards centrally with respect to the module and having the hinging elements for hinging one module with the other. The upper surface 4A-4G of the curvilinear body 4 defines at least one sliding plane for said at least one conveyor with articulated links (the illustrated example shows seven distinct sliding surface 4A-4G for six different conveyors) in which, as usual, on some (4B-4F) of these surfaces two conveyors placed side by side and adjacent to each other are able to slide.

The curvilinear body 4 also comprises a base 4K (Fig. 11) comprising at least one usual lower surface 4H (Fig. 10) which is configured to define a connecting plane P2 (Fig. 10) parallel to the sliding plane P1, and is adapted to be constrained to and rest on at least one flat surface 5A of a support structure 5 (Fig. 10) provided below said support and guide element 1.

In the shown example, the curvilinear body 4 is of the type which is generally used for chain conveyors; the rails 4L of said plurality of rails depart from said base 4K, and said rails 4L are separated from each other by a portion of an upper surface 4J of the base 4K, opposite to the lower surface 4H.

The plurality of rails 4L are constrained to or are in one piece with the base 4K.

The base 4K is made of a polymeric material.

As usual, between one rail and another a recess, also referred to as channel, is provided which allows to receive the usual articulation elements of the chain and which, in the shown example includes a plurality of usual recessed seats 10 for housing the magnets.

The curvilinear body 4 might have other forms which are yet conventional for the person skilled in the art, depending on the type of conveyor that is supported and guided by the support and guide element 1; in the case of chain conveyors of the "bevel" or "tab" type, for example, the seats 10 for the magnets are not present. In the case of belt conveyors, the body 4 of the support element 1, as usual, does not have the rails 4L or has rails of very low height (adapted to reduce the friction surface of the belt) and has a substantially flat shape with a upper flat sliding surface for the belt and a lower flat surface parallel to the upper surface which acts as a connection surface for connecting the support structure 5.

The support and guide element 1 also comprises means 6A, 6B, 6C, 6D (Fig. 10 and Figs. 12-15) for removably connecting the base 4K of the curvilinear body 4 of the support and guide element to the support structure 5, which are configured to keep said base 4K connected to said support structure 5, and prevent at least said base 4K from moving relative to said support structure 5, in a first direction Z (Fig. 2) perpendicular to said sliding plane P1, and prevent the planarity of the sliding plane P1 from being affected.

According to the invention, the connecting means 6A, 6B, 6C, 6D (Fig. 10 and Figs. 12-15) comprise:
- a plurality of first connecting members 16A, 16B, 16C which are provided in first preset portions S1-S4 of the base 4K and configured to allow at least said portions S1-S4 of the base 4K of the support element to move relative to said support structure 5, in directions coplanar to the sliding plane P1 and prevent them from moving in the first direction Z perpendicular to said sliding plane P1, when said support and guide element 1 is connected to the support structure;
- at least one second connecting member 16D provided in at least one second portion S5 of said base 4K and configured to prevent said second portion S5 of said base 4K of the support element from moving relative to said support structure 5 in directions coplanar to said sliding plane P1 and to also prevent it from moving in said first direction Z perpendicular to said sliding plane P1, when said support and guide element 1 is connected to the support structure.

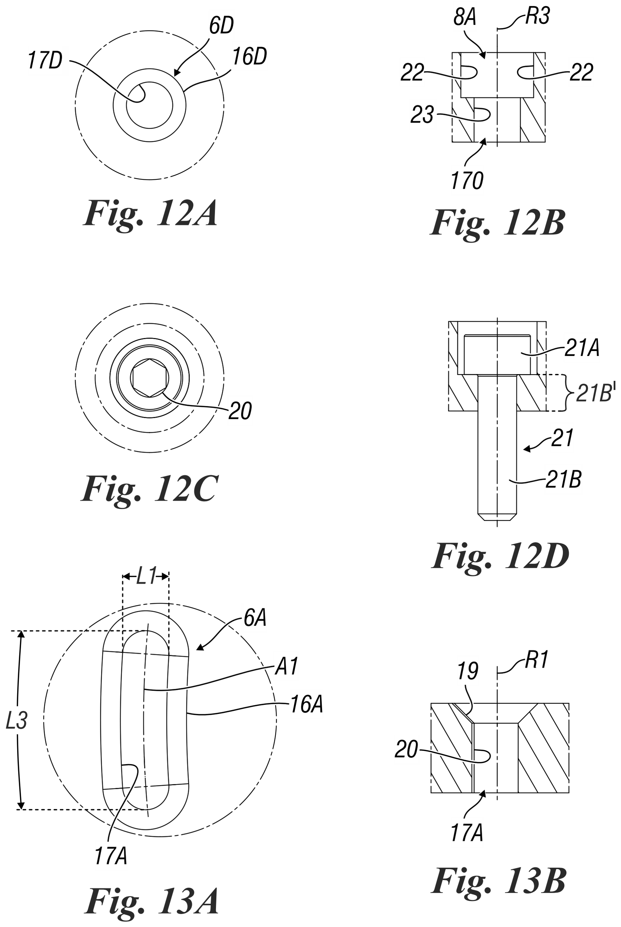

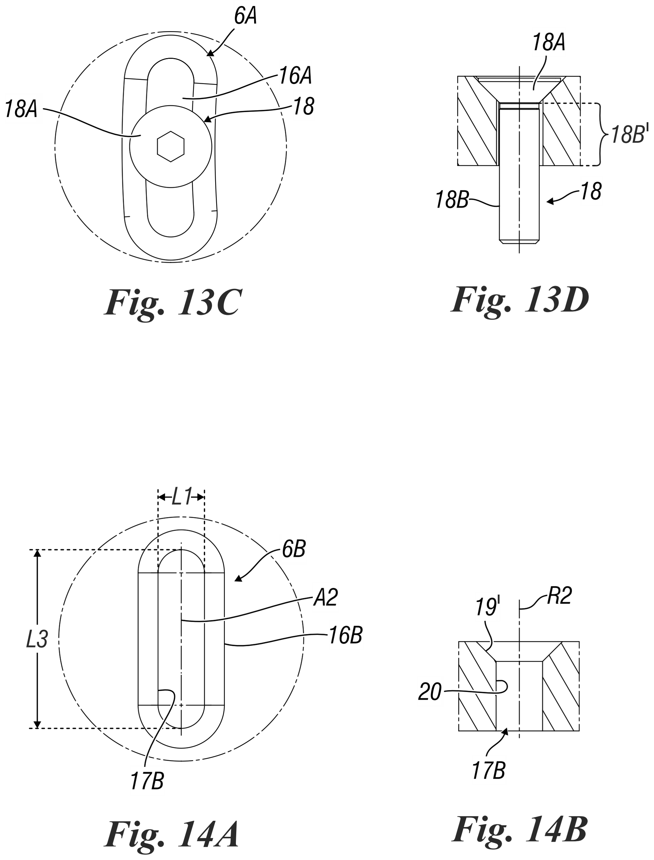

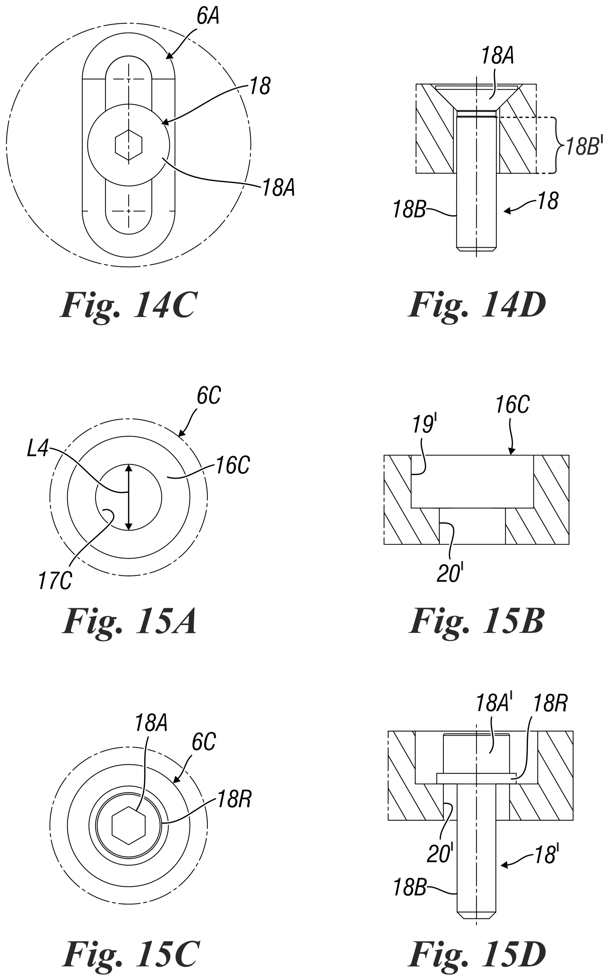

According to a preferred embodiment of the invention, the plurality of first connecting members 16A, 16B, 16C comprise a plurality of first through holes 17A, 17B, 17C (Figs. 13A-D, 14A-D) each configured to at least partially house a first connecting element 18, 18' for connecting said base 4K of the support and guide element 1 to the support structure 5, of the type comprising a shank 18B and a head 18A, 18A'.

According to a preferred embodiment of the invention, said plurality of first through holes 17A, 17B:
- are provided in said base 4K of the support and guide element 1 in the first preset portions S1-S4 thereof,
- have a central axis R1, R2 which is parallel to the direction Z (Fig. 2) perpendicular to the sliding plane P1 of the plurality of rails 4L,
- comprise a first part 19, 19' (Figs. 13B, 14B adapted to house said head 18A of the connecting elements 18, and a second part 20 adapted to house a portion 18B' of said shank 18B which extends from said head,
and the area of said first part 19 of the plurality of first through holes 17A, 17B is greater than the cross-sectional area of said head 18A and the area of said second part 20 of the plurality of first through holes 17A, 17B is greater than the cross-sectional area of said portion 18B' of the shank 18B of the connecting element, so that the portions S1-S4 of said base 4K of the connecting element provided at said plurality of first through holes 17A, 17B are able to at least partially move in directions lying in a plane parallel to the sliding plane P1 and the connecting plane P2.

According to a preferred embodiment of the invention, the at least one second connecting element 16D is provided in the second preset portion S5 of said base 4K and is configured to prevent said at least one preset portion S5 from making any movement relative to said support structure 5 when said support and guide element 1 is connected to the support structure.

According to a preferred embodiment of the invention, the at least one second connecting element 16D comprises:
- a plurality of second through holes 17D (Figs. 12A-D) each configured to at least partially house a second connecting element 21 for connecting said base 4K of the support and guide element 1 to the support structure 5, of the type comprising a shank 21B and a head 21A,
wherein said plurality of second through holes 17D:
- are provided in said base 4K of the support and guide element 1 in said at least one second preset portion S5,
- have a central axis R3 which is parallel to the direction Z (Fig. 2) perpendicular to the sliding plane P1 of said plurality of rails 4L,
- comprise a first part 22 (Figs. 13B, 14B) adapted to house said head 21A of the connecting elements 21, and a second part 23 adapted to house a portion 21B' of said shank 21B which extends from said head,
and the area of said second part 23 of the plurality of second through holes 17D is substantially equal to the cross-sectional area of said portion 18B' of the shank 18B of the connecting element, so that said second portion S5 of said base 4K of the connecting element provided at said plurality of second through holes cannot move in directions lying in a plane parallel to the sliding plane P1 and the connecting plane P2 and engage with the wall delimiting said second part 23 of the plurality of second through holes 17D.

According to the invention, the connecting elements 18, 18' and 21 which pass through the first and second through holes 17A-C and 17D of the support and guide element 1, all also engage with holes 25 (Figs. 10 and 11) provided in the support structure 5 coaxially to said first and second holes, so that said connecting elements 18, 18', 21 are stably constrained to the support structure 5 (for example by means of an engagement that involves a thread or a joint). Consequently, the connecting elements 18, 18', 21 and the support structure 5, when the support and guide element 1 is constrained to the structure 5, are fixed parts, during use of the conveyor system, while thanks to the special size and shape of the through holes 6A-C and the related connecting elements 18, 18', the support and guide element 1 can move relative to said support structure and said connecting elements in a plane parallel to the sliding plane P1 and the connecting plane P2 of the support and guide element, but not also in the direction Z perpendicular to this plane, so as to be able to compensate for any differences in thermal expansion between the polymeric material of the support and guide element and the metal material of the support structure and thereby to be able to maintain the planarity of the sliding plane P1 even if the conveyor system is subject to significant thermal variations.

Preferably, the plurality of first through holes 17A, 17B (Figs. 13A-D, 14A-D) have a regular elliptical shape (Fig. 14A) or an elliptical shape with the major axis A1 (Fig. 13A) curved and having a curvature which is equal to the curvature of the curvilinear body 4. In particular:
- the length L1 (Fig. 13A) of the minor axis of the elliptical hole is greater than the diameter of the shank of the connecting element inserted in the hole, and more preferably at least 25% greater,
- and/or the length L3 (Fig. 13A) of the major axis of the elliptical hole is greater than the diameter of the shank of the connecting element inserted in the hole, and more preferably at least twice greater.

According to a variant, preferably the plurality of first through holes 17C (Figs. 15A-D) have a circular shape with a diameter L4 which is greater than the diameter of the shank of the connecting element inserted into the hole, and more preferably at least 25% greater.

The connecting elements 18, 18', 21 preferably all have a shank 18B, 21B with the same diameter and preferably also the same length. Preferably, the head of the connecting elements is also always the same; the head can have any usual shape, for example it can be a countersunk head 18A or a cylindrical head 18A', 21A, and can also include a washer 18R (Fig. 15D) if the head has a diameter which is smaller than the diameter of the through hole 17C for the shank 18B.

Preferably, the first and second connecting members 16A-D are provided along a plurality of circular sectors S1-S5 (Fig. 1) of the curvilinear body, more preferably a plurality of first and second evenly spaced apart connecting members 16A-D are provided in each circular sector, preferably the second connecting members 16D are provided in a central circular sector 5, while the first connecting members 16A-C are provided in circular sectors S1-S4 which are lateral with respect to said central sector.

So, preferably, the curvilinear body 4 is stably constrained with no possibilities of movement with respect to the support structure 5 at one central circular sector S5 thereof, while it is able to move, only in a plane parallel to the sliding plane P1 and with respect to the support structure 5, at the other circular sectors S1-S4 provided on the sides of said central sector S5, so as to compensate for any differences in thermal expansion between the materials of the curvilinear body 4 and of the support structure 5 to which said body is constrained.

According to the invention, it is necessary for the curvilinear body 4 to provide at least one fixed connection that stably constrains a portion of the curvilinear body to the support structure 5 without any possibility of movement, so that the body can compensate for the different thermal expansions with respect to the thermal expansions of the support structure 5, while maintaining at least one of its parts fixed.

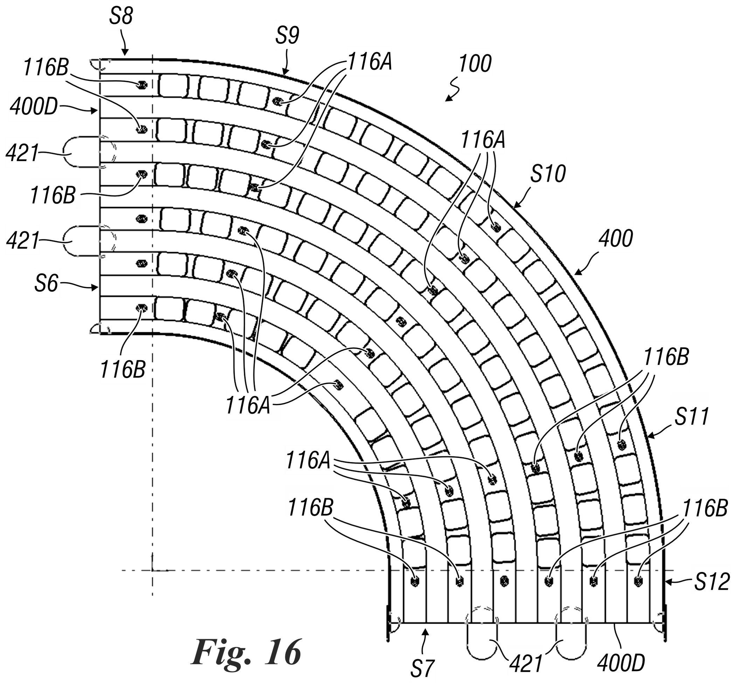

It should be noted that the portion of the curvilinear body 4 stably constrained to the structure 5 is not necessarily a central portion of the curvilinear body 4, such portion may also be included in another portion of the curvilinear body 4, for example at one of the ends S6, S7 (Fig. 16) thereof. Furthermore, to achieve this fixed connection, connecting means which are different from the connecting means described so far may also be used which, therefore, do not include a connecting element of the type comprising a head and a shank that engages in through holes. For example, Figure 16 shows a connecting element 100 in which the curvilinear body 400 is stably constrained without any possibility of movement at one or both the ends S6, S7 thereof by means of connecting bars 421 which are inserted flush into pockets provided in the edge of the ends of the curvilinear body 400 and are rigidly constrained to the support structure 5 in a conventional manner for the person skilled in the art. According to this embodiment, the curvilinear body 400 provides in the portions S8-S12 thereof, different from the end portions S6, S7, connecting members 116A, 116B completely analogous to the first connecting members 16A, 16B, 16C previously described, and which therefore comprise a plurality of first through holes 17A, 17B each configured to at least partially house a first connecting element for connecting the curvilinear body 400 of the support and guide element 100 to the support structure 5, of the type previously described, so that the portions S8-S12 of the curvilinear body 400 of the connecting element 100 provided at said plurality of first through holes 17A, 17B can at least partially move in directions lying in a plane parallel to the sliding plane P1 and the connecting plane P2, with respect to said support structure 5 to compensate for the different thermal expansions of said curvilinear body 400 and of said support structure 5.

The support structure 5 is a conventional structure for the person skilled in the art and is made of a metal material, or in any case of a material having a different expansion coefficient than that of the polymeric material of which the curvilinear body 4 of the support and guide element 1 is made.

The support structure 5 for example provides a plurality of radial cross members 5D (Figs. 10 and 11), the support surface 5A of the support structure 5 is defined by the upper flat surface 5A' of these radial cross members 5D.

The upper flat surfaces 5A' of these radial cross members 5D include the through holes 25 (Fig. 11) coaxial to the through holes 17A-C and 17D of said base 4K of the support and guide element 1 and in which the connecting elements 18, 18' and 21, which also pass through said first and second through holes 17A-C and 17D, are fixedly engaged. For this purpose, the through holes 25 provide for example a thread adapted to engage with a thread of the connecting elements 18, 18' and 21 or any other usual conformation, for example a snap-fit or shape-coupling conformation, which allows a stable constraint between the connecting elements 18, 18' and 21 and the cross members 5D.

As usual, the cross members 5D are constrained to curvilinear side walls 5E, 5F (Fig. 1) which are in turn connected to usual elements resting on the floor of the room where the conveyor system is provided.

Preferably, the curvilinear side walls 5E, 5F have their internal face in contact with the curvilinear side edges 4R, 4S (Fig. 1) of the curvilinear body 4 so as to stop or in any case to limit any lateral movements of the curvilinear body 4 with respect to the support structure 5 due to differences in thermal expansion between the materials of the body 4 and of said support structure 5.

For the return path, the support and guide element comprises, as usual for the person skilled in the art, a curvilinear body 40 (Fig. 2) which comprises for each conveyor 2 a guide 40A (which will not be described in detail below it being conventional for the person skilled in the art) that directs and supports the conveyor modules in their return path (Fig. 2 shows six guides 40A of the type for chain conveyors).

The curvilinear body 40, also comprises at least one usual upper surface 40H (Fig. 2), which is configured to define a connecting plane P20 (Fig. 2) and adapted to be constrained to and rest on at least one lower flat surface 5M of the support structure 5 (Fig. 10) provided above said body 40.

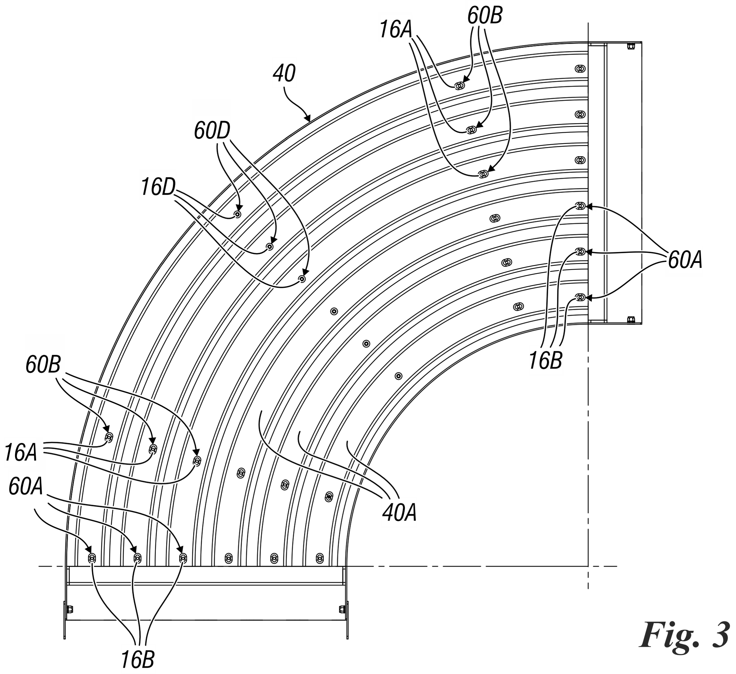

Preferably, the body 40 is constrained to the arms 5A of the support element 5 in a similar manner to that described for the body 4 of the forward path of the conveyor and therefore also comprises connecting means 60A, 60B, 60C, 60D (Figs. 3 and 12-14) which comprise:
- a plurality of first connecting members 16A, 16B, 16C (of the type previously described) which are configured to allow the body 40 of the support element to move relative to said support structure 5, in directions coplanar to said connecting plane P20 and to prevent it from moving in said first direction Z perpendicular to said sliding plane P20,
at least one second connecting member 16D (of the type previously described) which is configured to prevent the body 40 of the support element from moving relative to said support structure 5 in directions coplanar to said connecting plane P20 and to also prevent it from moving in said first direction Z perpendicular to said connecting plane P20.

For the sake of brevity, the characteristics of the connecting members 16A, 16B, 16C, 16D will not be repeated, as also for the body 40 they are similar to those of the body 4 of the forward path of the conveyor, just as similar are the characteristics of the connecting elements which pass through the through holes of these connecting members and all also engage in holes provided in the support structure 5 coaxially to said through holes, so that said connecting elements 18, 18', 21 are stably constrained to the support structure 5 (for example with an engagement that involves a thread or a joint), in a manner completely similar to that described for the upper body 4. Consequently, the connecting elements and the support structure 5, when the body 40 of the support and guide element 1 is constrained to the structure 5, are a fixed part, during use of the conveyor system, while thanks to the special size and shape of the through holes 60A-C and the related connecting elements, the body 40 of the support and guide element 1 can move relative to said support structure and said connecting elements in a plane parallel to the connecting plane P20, but not also in the direction Z perpendicular to this plane, so as to be able to compensate for any differences in thermal expansion between the polymeric material of the body 40 of the support and guide element and the metal material of the support structure 5, and thereby to be able to maintain the planarity of the connecting plane P20 and consequently also of the guides 40A for the return path of the conveyors, even if the conveyor system is subject to thermal variations.

The invention also relates to a conveyor system comprising:
- a plurality of support and guide elements 1 of the type previously described, for at least one conveyor with articulated modules 2 for handling three-dimensional items,
- at least one modular track 3 for guiding said modular conveyor 2, comprising a plurality of said support and guide elements arranged in a row;
- a support structure 5 of the type previously described to which said support and guide elements are constrained to form said modular track 3,
- wherein said at least one support and guide element 1 comprises
   - at least one curvilinear a body 4, comprising:
      - a plurality of rails 4L comprising at least one usual upper surface 4A-4G configured to define a sliding plane P1 for at least one lower flat portion of the modules 2A of the conveyor 2 when moved;
      - a base 4K comprising at least one usual lower surface 4H which is configured to define a connecting plane P2 parallel to the sliding plane P1, and adapted to be constrained to and rest on at least one flat surface 5A of at least one part 5B of said support structure 5;
      - wherein said curvilinear body 4 is made of a polymeric material;
      - wherein the rails 4L of said plurality of rails depart from said base 4K, and
         said rails 4L are separated from each other by a portion of an upper surface 4J of said base 4K, opposite to said lower surface 4H,
      - wherein said plurality of rails 4L are constrained to or are in one piece with the base 4K,
- wherein at least the part 5B of said support structure 5 comprising said flat surface 5A is made of a preferably metal material having a different thermal expansion coefficient than the thermal expansion coefficient of the polymeric material of said base 4K of the curvilinear body 4 of the support and guide elements (1),
- means 6A, 6B, 6C, 6D for removably connecting said base 4K to the support structure 5, configured to keep said base 4K connected to said support structure 5, and prevent at least said base 4K from moving relative to said support structure 5 due to different thermal expansions of said base 4K and said part 5B of said support structure 5, in a first direction Z perpendicular to said sliding plane P1, and prevent the planarity of the sliding plane P1 from being affected, when said support and guide element 1 is connected to the support structure.

According to the invention:
- the connecting means 6A, 6B, 6C, 6D comprise:
- a plurality of first connecting members 16A, 16B, 16C which are provided in first preset portions S1-S4 of the base 4K and configured to allow at least said portions S1-S4 of the base 4K of the support element to move relative to said support structure 5 due to the different thermal expansions of said base 4K and said part 5B of said support structure 5, in directions coplanar to said sliding plane P1 and prevent them from moving in said first direction Z perpendicular to said sliding plane P1, when said support and guide element 1 is connected to the support structure;
- at least one second connecting member 16D provided in at least one second preset portion S5 of said base 4K and configured to prevent at least said second preset portion S5 of said base 4K of the support element from moving relative to said support structure 5 due to the different thermal expansions of said base 4K and said part 5B of said support structure 5, in directions coplanar to said sliding plane P1 and to also prevent it from moving in said first direction Z perpendicular to said sliding plane P1, when said support and guide element 1 is connected to the support structure;
or said connecting means 6A, 6B, 6C, 6D comprise:
- a plurality of first connecting members 16A, 16B, 16C which are provided in first preset portions of said part 5B of the support structure 5 and configured to allow at least said portions of said part 5B of the support structure 5 to move relative to said base 4K due to the different thermal expansions of said base 4K and said part 5B of said support structure 5, in directions coplanar to said sliding plane P1 and to also prevent them from moving in said first direction Z perpendicular to said sliding plane P1, when said support and guide element 1 is connected to the support structure;
- at least one second connecting member 16D provided in at least one second preset portion of said part 5B of the support structure 5 and configured to prevent said at least one second preset portion of said part 5B of the support structure 5 from moving relative to said support structure 5 due to the different thermal expansions of said base and said part 5B of said support structure 5, in directions coplanar to said sliding plane P1 and to also prevent it from moving in said first direction Z perpendicular to said sliding plane P1, when said support and guide element 1 is connected to the support structure.

It should be reiterated, ultimately, that the embodiments illustrated so far have been provided by way of example and that numerous variants are also possible falling within the same inventive concept. For example, the invention also relates to a dual solution with respect to the one illustrated so far wherein, when the support and guide element is constrained to the support structure 5:
- the connecting elements 18, 18' and 21 are stably engage (for example by means of an engagement that involves a thread or a joint) with the base 4K which, for this purpose, includes holes having the same section as the section of the shank of the connecting elements and, therefore, has no possibilities of movement with respect to said connecting elements,
- and wherein the through holes 17A, 17B 17C are provided in the portions 5A of the structure 5 to which the base 4K is constrained and not in the base itself, and also the head 18A, 21A of the connecting elements 18, 18' and 21 is housed in said holes 17A, 17B, 17C provided in the support structure 5, similarly to what was previously described with reference to the through holes provided in the base 4K. According to this variant, it is the portions 5A of the support structure 5 that can move relative to the connecting elements 18, 18' and 21 and to the base 4K in directions lying in a plane parallel to the connecting plane P2 of the curvilinear body, in order to compensate for the different thermal expansions of said base 4K and the support structure 5 to which it is constrained.

## Claims

1. A support and guide element (1) for at least one conveyor with articulated modules (2) for handling three-dimensional items, of the type adapted to create at least one modular track (3) for guiding said modular conveyor (2), comprising:
- at least one curvilinear body (4), comprising:
- a plurality of rails (4L) comprising at least one upper surface (4A-4G) which is configured to define a sliding plane (P1) for at least one lower flat portion of the modules (2A) of the conveyor (2) when moved;
- a base (4K) comprising:
- at least one usual lower surface (4H) which is configured to define a connecting plane (P2) parallel to the sliding plane (P1), and adapted to be constrained to and rest on at least one flat surface (5A) of a support structure (5);
- wherein the rails (4L) of said plurality of rails depart from said base (4K), and
said rails (4L) are separated from each other by a portion of an upper surface (4J) of said base (4K), opposite to said lower surface (4H),
- wherein said plurality of rails (4L) are constrained to or are in one piece with said base (4K),
- wherein said base (4K) is made of a polymeric material,
- means (6A, 6B, 6C, 6D) for removably connecting said base (4K) to the support structure (5), which are configured to keep said base (4K) connected to said support structure (5), and to prevent at least said base (4K) from moving relative to said support structure (5), in a first direction (Z) perpendicular to said sliding plane (P1) and prevent the planarity of the sliding plane (P1) from being affected when said support and guide element (1) is connected to the support structure;
**characterized in that**
- the connecting means (6A, 6B, 6C, 6D) comprise:
- a plurality of first connecting members (16A, 16B, 16C) which are provided in first preset portions (S1-S4) of said base (4K) and configured to allow at least said portions (S1-S4) of said base (4K) of the support element to move relative to said support structure (5), in directions coplanar to said sliding plane (P1) and prevent them from moving in said first direction (Z) perpendicular to said sliding plane (P1), when said support and guide element (1) is connected to the support structure;
- at least one second connecting member (16D) provided in at least one second preset portion (S5) of said base (4K) and configured to prevent at least said second preset portion (S5) of said base (4K) of the support element from moving relative to said support structure (5) in directions coplanar to said sliding plane (P1) and to also prevent it from moving in said first direction (Z) perpendicular to said sliding plane (P1), when said support and guide element (1) is connected to the support structure.

2. The support and guide element (1) according to claim 1, **characterized in that** the plurality of first connecting members (16A, 16B, 16C) comprise a plurality of first through holes (17A, 17B, 17C) each configured to at least partially house a first connecting element (18, 18'), of the type comprising a shank (18B) and a head (18A, 18A'), for connecting said base (4K) of the support and guide element (1) to the support structure (5),
wherein said plurality of first through holes (17A, 17B):
- are provided in said base (4K) of the support and guide element (1) in the first preset portions (S1-S4) thereof,
- have a central axis (R1, R2) which is parallel to the direction (Z) perpendicular to the sliding plane (P1) of the plurality of rails (4L),
- comprise a first part (19, 19') adapted to house said head (18A) of the connecting elements (18), and a second part (20) adapted to house a portion (18B') of said shank (18B) which extends from said head,
and **in that** the area of said first part (19) of the plurality of first through holes (17A, 17B) is greater than the cross-sectional area of said head (18A) and **in that** the area of said second part (20) of the plurality of first through holes (17A, 17B) is greater than the cross-sectional area of said portion (18B') of the shank (18B) of the connecting element, so that the portions (S1-S4) of said base (4K) of the connecting element (1) provided at said plurality of first through holes (17A, 17B) are able to at least partially move in directions lying in a plane parallel to the sliding plane (P1) and the connecting plane (P2).

3. The support and guide element (1) according to claim 1 or 2, **characterized in that** the at least one second connecting member (16D) is provided in said at least one second preset portion (S5) of said base (4K) and is configured to prevent said at least one preset portion (S5) from making any movement relative to said support structure (5) when said support and guide element (1) is connected to the support structure; and/or **in that** at least one second connecting member (16D) comprises:
- a plurality of second through holes (17D) each configured to at least partially house a second connecting element (21), of the type comprising a shank (21B) and a head (21A), for connecting said base (4K) of the support and guide element (1) to the support structure (5),
wherein said plurality of second through holes (17D):
- are provided in said base (4K) of the support and guide element (1) in said at least one second preset portion (S5),
- have a central axis (R3) which is parallel to the direction (Z) perpendicular to the sliding plane (P1) of said plurality of rails (4L),
- comprise a first part (22) adapted to house said head (21A) of the connecting elements (21), and a second part (23) adapted to house a portion (21B') of said shank (21B) which extends from said head,
and **in that** the area of said second part (23) of the plurality of second through holes (17D) is substantially equal to the cross-sectional area of said portion (18B') of said shank (18B) of the connecting element, so that said second portion (S5) of said base (4K) of the support and guide element (1) provided at said plurality of second through holes cannot move in directions lying in a plane parallel to the sliding plane (P1) and the connecting plane (P2) and engage with the wall delimiting said second part (23) of the plurality of second through holes (17D).

4. The support and guide element (1) according to claim 2 and/or 3, **characterized in that** the connecting elements (18, 18', 21) which pass through the first and second through holes (17A-C, 17D) of the support and guide element (1) all also engage with holes (25) provided in the support structure (5) coaxially to said first and second holes, so that said connecting elements (18, 18', 21) are stably constrained to the support structure (5), for example by means of an engagement that involves a thread or a joint, so that the connecting elements (18, 18', 21) and the support structure (5), when the support and guide element (1) is constrained to the structure (5), are fixed parts, during use of the conveyor system, while thanks to the special size and shape of the through holes (6A-C) and the related connecting elements (18, 18'), the support and guide element (1) can move relative to said support structure and said connecting elements in a plane parallel to the sliding plane (P1) and the connecting plane (P2) of the support and guide element, but not also in the direction (Z) perpendicular to this plane, so as to be able to compensate for any differences in thermal expansion between the polymeric material of the support and guide element and the metal material of the part (5A) of the support structure (5) to which said support and guide element is connected, and thereby to be able to maintain the planarity of the sliding plane (P1) even if the conveyor system is subject to thermal variations.

5. The support and guide element (1) according to one or more of claims 2 to 4, **characterized in that** the plurality of first through holes (17A, 17B) have a regular elliptical shape or an elliptical shape with the major axis (A1) curved and having a curvature equal to the curvature of the curvilinear body (4), and **in that**:
- the length (L1) of the minor axis of the elliptical hole is greater than the diameter of the shank of the connecting element inserted in the hole, and more preferably at least 25% greater,
- and/or the length (L3) of the major axis of the elliptical hole is greater than the diameter of the shank of the connecting element inserted in the hole, and more preferably at least twice greater.

6. The support and guide element (1) according to one or more of claims 2 to 5, **characterized in that** the plurality of first through holes (17C) have a circular shape with a diameter (L4) which is greater than the diameter of the shank of the connecting element inserted into the hole, and more preferably at least 25% greater.

7. The support and guide element (1) according to one or more of claims 2 to 6, **characterized in that** the connecting elements (18, 18', 21) all have a shank (18B, 21B) with the same diameter and also the same length.

8. The support and guide element (1) according to one or more of claims 2 to 7, **characterized in that** the first and second connecting members (16A-D) are provided along a plurality of circular sectors (S1-S5) of the curvilinear body,
**in that**, preferably, a plurality of first and second connecting members (16A-D) equally spaced from each other are provided in each circular sector,
and **in that**, preferably, the second connecting members (16D) are provided in a central circular sector (5), while the first connecting members (16A-C) are provided in circular sectors (S1-S4) which are lateral relative to the said central sector.

9. The support and guide element (1) according to one or more of claims 1 to 8, **characterized in that** at least the part (5A) of the support structure (5) that comes into contact with the support and guide element (1) is made of a metal material, or in any case of a material having a different expansion coefficient than that of the polymeric material of which the curvilinear body (4) of the support and guide element (1) is made;
- **in that**, preferably, the support structure (5) provides a plurality of radial cross members (5D), the support surface (5A) of the support structure (5) being defined by the upper flat surface (5A') of these radial cross members (5D);
- **in that**, preferably, the upper flat surfaces (5A') of these radial cross members (5D) provide through holes (25) coaxial to the through holes (17A-C, 17D) of said base (4K) of the support and guide element (1) and in which the connecting elements (18, 18', 21), which also pass through said first and second through holes (17A-C, 17D), are fixedly engaged;
- **in that**, preferably, the cross members (5D) are constrained to curvilinear side walls (5E, 5F) which are in turn connected to usual elements resting on the floor of the room where the conveyor system is provided, wherein preferably the curvilinear side walls (5E, 5F) have their internal face in contact with the curvilinear side edges (4R, 4S) of the curvilinear body (4).

10. The support and guide element (1) according to one or more of claims 1 to 9, **characterized in that** the support and guide element comprises, for the return path, a curvilinear return body (40) which comprises for each conveyor (2) a guide (40A) that directs and supports the conveyor modules in their return path;
wherein the curvilinear return body (40) comprises at least one usual upper surface (40H), which is configured to define a connecting plane (P20) and adapted to be constrained to and rest on at least one lower flat surface (5M) of at least one portion (5A) of the support structure (5) provided above said body (40);
wherein the curvilinear return body (40) comprises connecting means (60A, 60B, 60C, 60D) which comprise:
- a plurality of first connecting members (16A, 16B, 16C) configured to allow the body (40) of the support element to move relative to said support structure (5), in directions coplanar to said connecting plane (P20) and prevent it from moving in said first direction (Z) perpendicular to said connecting plane (P20),
- at least one second connecting member (16D) configured to prevent the body (40) of the support element from moving relative to said support structure (5), in directions coplanar to said connecting plane (P20) and also prevent it from moving in said first direction (Z) perpendicular to said connecting plane (P20).

11. A conveyor system comprising:
- at least one support and guide element (1) for at least one conveyor with articulated modules (2) for handling three-dimensional items, and of the type adapted to create at least one modular track (3) for guiding said modular conveyor, wherein said modular track (3) comprises a plurality of said sequential and/or lined up support and guide elements;
- a support structure (5) to which said at least one support and guide element (1) is constrained to form said modular track (3),
- wherein said at least one support and guide element (1) comprises:
- at least one curvilinear body (4), comprising:
- a plurality of rails (4L) comprising at least one usual upper surface (4A-4G) which is configured to define a sliding plane (P1) for at least one lower flat portion of the modules (2A) of the conveyor (2) when moved;
- a base (4K) comprising at least one usual lower surface (4H) which is configured to define a connecting plane (P2) parallel to the sliding plane (P1), and adapted to be constrained to and rest on at least one flat surface (5A) of at least one part (5B) of said support structure (5);
- wherein said curvilinear body (4) is made of a polymeric material,
- wherein the rails (4L) of said plurality of rails extend from said base (4K), and
said rails (4L) are separated from each other by a portion of an upper surface (4J) of said base (4K), opposite to said lower surface (4H),
- wherein said plurality of rails (4L) are constrained to or in one piece with said base (4K),
- wherein at least the part (5B) of said support structure (5) comprising said flat surface (5A) is made of a preferably metal material, having a thermal expansion coefficient different from the thermal expansion coefficient of the polymeric material of said base (4K) of the curvilinear body (4) of the support and guide elements (1),
- means (6A, 6B, 6C, 6D) for removably connecting said base (4K) to the support structure (5), which are configured to keep said base (4K) connected to said support structure (5), and at least prevent said base (4K) from moving relative to said support structure (5) due to the different thermal expansions of said base (4K) and said part (5B) of said support structure (5), in a first direction (Z) perpendicular to said sliding plane (P1) and prevent the planarity of the sliding plane (P1) from being affected when said support and guide element (1) is connected to the support structure; **characterized in that**
- the connecting means (6A, 6B, 6C, 6D) comprise:
- a plurality of first connecting members (16A, 16B, 16C) which are provided in first preset portions (S1-S4) of the base (4K) and configured to allow at least said portions (S1-S4) of the base (4K) of the support element to move relative to said support structure (5) due to the different thermal expansions of said base (4K) and said part (5B) of said support structure (5), in directions coplanar to said sliding plane (P1) and prevent them from moving in said first direction (Z) perpendicular to said sliding plane (P1), when said support and guide element (1) is connected to the support structure;
- at least one second connecting member (16D) provided in at least one second preset portion (S5) of said base (4K) and configured to prevent said at least one second preset portion (S5) of said base (4K) of the support element from moving relative to said support structure (5) due to different thermal expansions of said base (4K) and said part (5B) of said support structure (5) in directions coplanar to said sliding plane (P1) and to also prevent it from moving in said first direction (Z) perpendicular to said sliding plane (P1), when said support and guide element (1) is connected to the support structure; or **in that** said connecting means (6A, 6B, 6C, 6D) comprise:
- a plurality of first connecting members (16A, 16B, 16C) which are provided in first preset portions of said part (5B) of the support structure (5) and configured to allow at least said portions of said part (5B) of the support structure (5) to move relative to said base (4K) due to the different thermal expansions of said base (4K) and said part (5B) of said support structure (5), in directions coplanar to said sliding plane (P1) and to also prevent it from moving in said first direction (Z) perpendicular to said sliding plane (P1), when said support and guide element (1) is connected to the support structure;
- at least one second connecting member (16D) provided in at least one second preset portion of said part (5B) of the support structure (5) and configured to prevent said at least one second preset portion of said part (5B) of the support structure (5) from moving relative to said support structure (5) due to different thermal expansions of said base and said part (5B) of said support structure (5), in directions coplanar to said sliding plane (P1) and to also prevent it from moving in said first direction (Z) perpendicular to said sliding plane (P1), when said support and guide element (1) is connected to the support structure.

12. The conveyor system according to claim 11, **characterized in that** the at least one support and guide element (1) has the characteristics set forth in one or more of claims 1 to 10.
